# EUROPEAN PATENT SPECIFICATION

(11) **EP 0 443 228 B1**
(45) Date of publication and mention of the grant of the patent: **16.03.1994**
(21) Application number: 90301777.0
(22) Date of filing: 19.02.1990
(51) Int. Cl.: C04B 30/02, C04B 14/46, C08K 7/04, C04B 35/80, C22C 1/09

(54) **Producing a three-dimentional random weave of thin ceramic tubes**
Herstellung eines dreidimensionalen Zufallsgewebes aus dünnen keramischen Röhren
Fabrication d'un tissu aléotoire tridimensionnel de tubes céramiques minces

(43) Date of publication of application: 28.08.1991
(73) Proprietor: EXXON RESEARCH AND ENGINEERING COMPANY, Florham Park, New Jersey 07932-0390 (US)
(72) Inventor: Witzke, Horst, Flemington, New Jersey 08822 (US); Kear Bernard Henry, Whitehouse Station, New Jersey (US)
(74) Representative: Somers, Harold Arnold

(56) References cited:
- EP-A- 0 198 558
- EP-A- 0 325 236
- DE-A- 3 421 196
- CHEMICAL ABSTRACTS, vol. 107, no. 10, September 1987, page 308, abstract no. 82733f, Columbus, Ohio, US; & JP-A-62 124 909 (MITSUI ENGINEERING AND SHIPBUILDING CO., LTD) 06-06-1987
- CHEMICAL ABSTRACTS, vol. 106, no. 18, May 1987, page 292, abstract no. 142876w, Columbus, Ohio, US; & JP-A-62 04 997 (MITSUI ENGINEERING AND SHIPBUILDING CO., LTD) 10-01-1987

## Description

This invention relates to producing a three-dimensional random weave of thin ceramic tubes.

Although many filamentary materials are known for their utility as thermal insulators, there is still need for higher efficiency systems and lower cost fabrication procedures. Today's tiles used in the American Space Shuttle, for example, are produced in a costly process from melt-spun filaments of SiO₂. To produce the desired tile with controlled volume fraction, the SiO₂ filaments are chopped up, randomized, placed in a mold and partially sintered under pressure at elevated temperatures. The sintering process is designed to achieve a specific volume fraction of interwoven filaments that are firmly bonded at points of contact in a random array. Such an open structure has high thermal impedance coupled with modest structural strength, which makes it ideal for shuttle tiles and other insulating purposes where thermal insulation for a transitory period is required.

CHEMICAL ABSTRACTS 107 : 82733f, p. 308, 1987 & JP-A-62 124 909 disclose the manufacture of ceramic tube, in which a cylindrical substrate is coated with a ceramic vapor deposition, and the cylindrical substrate is removed by burning or dissolving to form the required ceramic tube.

In CHEMICAL ABSTRACTS 106 : 142876w, p. 292, 1987 & JP-A-62 04 997, an article having a plurality of ceramic webs between an upper and a lower ceramic surface layer is prepared by chemical vapor deposition of a ceramic material on a graphite pattern, removing part of the ceramic layer, and burning out the pattern. SiC, Si₃N₄ and Al₂O₃ articles have been prepared by this method.

According to the present invention there is provided a method for producing a three-dimensional random weave of thin ceramic tubes, which method comprises: contacting a metallic catalyst for growing multi-directional carbon fibers with one or more gaseous hydrocarbons in a mold at a temperature sufficient to form filamentary carbon and insufficient to cause the pyrolytic deposition of carbon, depositing a conformal coating consisting of a ceramic or ceramic forming material on the carbon fibers, and heating the coated fibers in an oxygen containing atmosphere for a time sufficient to volatilize, by oxidation, all or substantially all of the carbon, to form the ceramic tubes.

The method disclosed herein results in the production of ceramic filamentary micro-tubular materials. The method is an entirely fluid-phase method for producing such interwoven ceramic filamentary tubular materials. The process depends for its success on the ability to generate a three-dimensional random weave of ceramic tubes, for example with diameters in the range of about .01 to 2.0 microns, by forming carbon filaments by the catalytic decomposition of the hydrocarbon feed, before coating the filaments with the ceramic coating and then oxidizing the coated filaments to remove the carbon core, leaving behind hollow ceramic micro-tubular filaments. The ceramic micro-tubular materials may be free-standing porous structures and may have a variety of uses as thermal insulators, catalyst supports, superconductor supports, filters or as reinforcements for composites.

The metallic catalyst can be in finely divided form and the catalyst contacted with the hydrocarbon(s) in said mold at a temperature from the dissociation temperature of the hydrocarbon to about 900°C. The conformal ceramic coating can be deposited to a thickness of from about 0.01 µm (micron) to about 0.5 µm (micron) on the carbon fibers.

Different techniques are possible for depositing the conformal coating, e.g. chemical vapor deposition, electroplating or electro-less deposition.

A second conformal coating may be deposited on the ceramic tubes after volatilizing the carbon. This second coating can be carbon, a metal, a ceramic compound or mixture thereof.

According to a development, a liquid matrix material such as a polymer, elastomer, epoxy resin, metal, alloy or ceramic, can be introduced to the mold and converted to a solid after the volatilization step. The resulting structure may have at least one section with a thickness of less than one millimeter.

The metallic catalyst can be contacted with a C₂ hydrocarbon gas in the mold and the temperature at which the contacting takes place may be from about 450°C to 750°C.

A preferred way of putting the present invention into effect to produce an insulating material comparable with that mentioned above for producing today's Shuttle tiles would involve growing an interwoven network of carbon substrate filaments within a shaped mold, formed in the shape of a shuttle tile, coating the filaments with a Si containing deposit by chemical vapor deposition (CVD), followed by oxidation to eliminate the carbon filament core. The volume fraction as well as the bridging of the filaments is easily controlled by this method as discussed in copending European patent application 89313564.0 EP-A-0433507, filed 22nd December, 1989. An added advantage of this process, in addition to its low-cost, is the ability to produce ultra-fine, less than 1 micron in diameter hollow filaments, with controlled diameter and wall thickness. For the same volume fraction, such hollow structures should be even more effective in impeding heat transfer, while sacrificing little in structural strength.

The novel material to be described in more detail hereinbelow may also find utility as a potential replacement for environmentally hazardous asbestos in insulating materials employed in the construction industry. The micro-tubular material mimics the structure of asbestos, i.e., it is in the form of thin-walled hollow tubular filaments.

Catalyst supports are generally ceramic materials such as silicon dioxide or aluminum oxide prepared with high surface areas in the form of pellets. The novel material disclosed herein, if grown in the shape of a brick as for the shuttle tile, can also be employed to construct a very high and controllable surface-area catalyst support bed of predetermined dimensions by stacking the bricks. Such a porous body, now of macroscopic dimensions, can now be loaded with catalyst particles by known methods, for example, liquid infiltration.

Exactly the same concept can also be exploited to fabricate a fixed bed for simple filtration purposes, for example to remove dust particles from the air, or for more sophisticated chemical separations when the surfaces of the filamentary networks have been appropriately pretreated, e.g., to give a chemically absorptive surface.

By the fabrication method disclosed herein it is also possible to entirely fabricate ultra-fine composites that are reinforced with a three-dimensional, tubular network. This has very broad implications for the design of advanced high specific strength composite structures. In the design of such composites for structural applications, thin-walled tubes are preferred reinforcing, or load-bearing elements. This is because tubes make better use of the intrinsic structural strength of materials than rods of the same dimensions. In engineering practice, tubular elements are frequently linked together to form a three-dimensional structure of great strength and flexibility, e.g., as in a geodesic dome. In nature, similar engineering principles are exploited, but with the added complication that the hollow, or cellular structures are themselves composites of intricate design. Networks of cellulose fibers provide much of the reinforcement in natural composites, e.g., trees, grasses, bamboos. Although many attempts have been made to mimic such natural composite designs, so far these efforts have met with little success, primarily because of the difficulty of making hollow filaments with appropriately small dimensions.

By the present method, almost any desired filament-filler matrix combination can be produced by utilizing chemical vapor deposition (CVD) to modify the surface properties of the filamentary micro-tubular material. Infiltration of filler matrix materials can be achieved by adaptation of existing materials technologies.

Yet another application for these porous structures is as substrates for the recently discovered thin superconducting oxide layers. These could be applied by sol-gel techniques, i.e., dipping and draining, or by more advanced techniques such as by CVD from multiple sources. After deposition on the surface of the filaments either an annealing treatment below the melting point, or a brief melting operation may be necessary to coarsen the grain structure of the superconducting phase. It is known that an alumina substrate is ideal for this purpose, in that good wetting between the alumina and the high Technitium (Tc) superconducting oxides occurs, without significant chemical degradation if the exposure time is brief. It is understood that all processing steps be carried out in an oxygen-rich environment in order to maintain the desired stoichiometry of such superconducting phases. After coating the filaments with the desired thickness of the superconducting phase, the structure may be infiltrated with a polymer to achieve the desired flexibility and strength for structural applications such as filament windings for energy storage and transmission.

It is clear from these examples that there are many uses for such novel materials comprised of interwoven networks of ceramic hollow filaments, whether coated or not. Other applications not listed can be envisioned which are obvious to those skilled in the art.

For a better understanding of the invention and to show how the same may be carried into effect, reference will now be made, by way of example, to the accompanying drawings, wherein :-

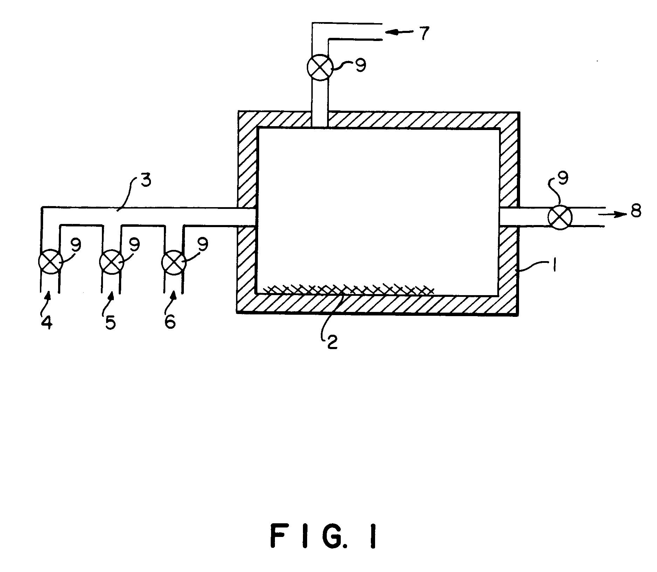

Figure 1 shows a cross-sectional view of a typical reactor for forming the present ceramic micro-tubular material. There is shown a reactor (1) which may be a metal, glass or ceramic material of a shape selected to provide the desired three-dimensional configuration of the ceramic micro-tubular material containing a catalyst (2) for forming carbon fibers. Conduit 3 is for introducing reactants into the reactor. Hydrocarbon for forming the carbon fibers is introduced through conduit 4, a volatile ceramic precursor is introduced through conduit 5 and oxygen or oxygen containing gas is introduced through conduit 6. A matrix material may be added through conduit 7. Gases may be removed from the reactor through conduit 8. The conduits are fitted with valves (9) to control or stop the flow of the various materials into or from the reactor.

Figure 2 is a photomicrograph of a ceramic microtubular material as shown by scanning electron microscopy. The Figure shows an entangled weave of ceramic tubes. The letter A indicates one such tube.

Figure 3 is a photomicrograph of a ceramic microtubular material at a higher magnification than Figure 2. The letter A indicates an end of a ceramic tube having an outside diameter of about 1 µm (1 micron) and a wall thickness of about 0.1 µm (0.1 micron).

The present invention provides for novel ceramic filamentary micro-tubular materials and a versatile process for making such materials entirely from the gas phase with minimal handling. The process relies on the rapid catalytic growth of carbon filaments at temperatures typically less than about 1000°C from gas-phase precursors as described in the aforesaid European patent application 89313564.0. An example is the catalytic growth of thin filaments of carbon from gaseous hydrocarbon, e.g. ethane at 700°C using metal alloy catalysts. When specific metal alloy catalysts are employed, as disclosed in the above European application and as described hereinbelow, it is in the nature of the growth process that the filaments intertwine to form a three-dimensional random weave (self-woven) network, which has some structural strength as a free-standing form. By appropriate choice of catalyst particles, filaments as small as about 0.01 µm (0.01 micron) in diameter can be produced.

As disclosed in European patent application 89313564.0, carbon filaments may be catalytically grown at temperatures typically less than about 1000°C from gas-phase precursors. An example is the catalytic growth of thin filaments of carbon from gaseous hydrocarbons, e.g., ethane at 700°C. The performance of the process involves rapid catalytic growth of carbon filaments which eventually expand to fill the available space in the shaped mold. Furthermore, it is in the nature of the growth process that the filaments intertwine to form a three-dimensional random weave (self-woven network), which has some structural integrity as a free-standing form. By appropriate choice of catalyst particles, filaments as small as 0.01 µm (0.01 micron) in diameter can be produced.

The carbon filaments can be grown catalytically at elevated temperatures using hydrocarbon gases and a metal alloy catalyst. The carbon filaments range in diameter from 0.01 µm (0.01 micron) to about 2 µm (2 microns), may be several hundred microns long and are grown in a randomly intertwined network at a volume density ranging from about 2% to about 20%.

In more detail, a filamentary carbon network can be formed in-situ within a mold by catalytic decomposition of the hydrocarbon feed, utilizing metal alloy catalyst particles that are applied to the walls of the mold. The seeded mold is placed into a furnace or heated externally to the desired temperature and a hydrocarbon gas is allowed to flow through the mold. The filamentary network is permitted to grow until the mold cavity is filled with the desired volume fraction of filaments. The natural tendency of the random weave of filaments uniformly to fill the available space in the mold ensures faithful replication of the internal surface features of the mold.

The catalysts disclosed herein enable a rapid, voluminous growth to be produced that tends to fill available space.

It has been discovered that two classes of metal alloy systems yield such space-filling growths. Both classes are distinguished by metal combinations that form a series of solid solutions over their whole composition range and are a combination of a transition metal which is known to be a relatively good catalyst for filamentous carbon growth and one which shows no catalytic activity whatever, or one which is a poor catalyst.

The preferred alloy system of the first type is based on the system Ni/Cu, an example of a Group VIII metal, Ni, that is known to be a catalyst for filamentous carbon formation, and a Group IB metal, Cu, that is not a catalyst for filamentous carbon formation. Ni and Cu form a series of solid solutions over their whole composition range. A preferred composition range for the purposes of this process is from about 20 wt% Ni to about 90 wt% Ni, with the range from about 40 wt% Ni to about 80 wt% being more preferred.

When Ni is used as a catalyst for the formation of filamentous carbon from ethane or ethylene, the filaments tend to be relatively short with an aspect ratio of about less than 10 and the Ni catalyst particle is found at the tip of the filament. The Ni tends to become deactivated relatively quickly, most likely by being coated with a layer of carbon restricting further access of the hydrocarbon molecules. This results in a relatively inefficient process and relatively small yields of carbon per gram of catalyst and very little intergrowth of the filaments. Unexpectedly when Cu is added to the Ni, the alloy catalyst forms very long filaments with aspect ratios generally greater than about 200. The actual aspect ratio is not known definitively because it is difficult to find the ends of any one particular filament in the intertwined network.

Filaments grown from Ni/Cu alloys are further distinguished from those grown from Ni by the location of the catalyst particle within the filament. Rather than being at the tip of the filament, the catalyst particle is predominantly found at the midpoint of two filaments. Thus a single catalyst particle is found to grow two carbon filaments in opposite directions. The two filaments are believed to grow simultaneously. We have also observed instances of a single Ni/Cu particle growing as many as six carbon filaments, suggestive of the six faces of a cube, all active for the growth of a carbon filament. This extraordinary multi-directional growth is believed to be responsible for the remarkably rapid and space-filling tendency of filamentary carbon growths from the Ni/Cu systems.

Other combinations of Group VIII-IB solid solution metal alloys such as Ni/Au, Co/Au, Fe/Au and Co/Cu also show significantly enhanced catalytic activity over the pure Group VIII metal and the alloy systems produce predominantly bi-directional carbon filament growths. As in the case of the Ni/Cu system, these alloys are combinations of known catalysts for filamentous carbon formation, namely Ni, Fe and Co, and a non-catalyst, namely Cu and Au.

A preferred example of the second class of metal alloy catalyst is the Ni/Pd system. Ni and Pd also form a series of solid solutions over their whole composition range. Whereas Ni is a relatively active catalyst for filamentary carbon growth, Pd is a relatively poor catalyst. When an alloy of Ni/Pd of about 50/50 wt% is used with ethane or ethylene, an almost "explosive" type of filamentary carbon growth is obtained. Like the Group VIII-IB combinations described above, the carbon growth tends to fill all available space, but at a much more rapid rate, in minutes rather than in tens of minutes. The carbon filaments are also found to be predominantly bi-directional, i.e., at least two carbon filaments grow from a single catalyst particle. Because of the very rapid space-filling growth with this catalyst system, the carbon growth tends to be of a very low volume density, typically about 2 vol % rather than the more common 5 to about 10 vol % within the Ni/Cu system. Another distinguishing feature of this type of growth is that it tends to be "sponge-like" with some resiliency reminding one of sponge-rubber.

The unexpected beneficial nature of the addition of Pd to Ni has also been observed with another Group VIII base metal/Pd combination which forms a solid solution, namely Co/Pd. In this case also, the alloy system shows significantly higher catalytic activity for carbon growth than the non-noble Group VIII metal, the carbon filaments are predominantly bi-directional and the carbon growth has some resiliency and tends to fill available space.

The preferred form of the catalyst is a fine powder, although bulk forms such as rolled sheet or thin films may also be employed. There appears to be an appoximate one-to-one correspondence between the size of the catalyst particle and the diameter of the carbon filament and generally carbon filaments with diameters less than about 1 µm (micron) are preferred. Surprisingly even when bulk material or powder significantly larger than 1 µm (1 micron), up to 40 microns for example, is used, the alloy disintegrates during the filamentary carbon growth process such that particles ranging in size from about 0.01µm (0.01 micron) to about 2µm (2 microns) are generated. The process responsible for this advantageous disintegration is believed to be similar to one known as "metal dusting".

For some applications it may be preferred to manufacture approximately monodisperse carbon filaments, i.e., filaments with substantially the same diameter. In this case it is clearly advantageous to start with alloy catalyst particles that are all substantially of the same diameter and of a size substantially equal to the desired diameter of the carbon filaments. Such alloy powders could be produced by aerosol production from the melt or by thermal evaporation at relatively high pressures such that a metal "smoke" is generated, or by pyrolysis of a volatile organo-metallic precursor.

Alloy particles may also be synthesized in-situ in a mold if desired. Such well-known techniques as evaporating an aqueous solution of the salts in Ni and Cu, e.g. nitrates, chlorides, etc., followed by calcining to the metal oxides and then reducing the oxides to the metal alloy by heating in hydrogen, may also be employed. The concentration of the metal salts is adjusted such that the desired alloy composition is obtained. The walls of a mold could thus be seeded with the desired metal alloy catalyst by wetting the walls with the starting aqueous solution and forming the metal alloy particles in-situ. Another technique that may be employed is to deposit films of the constituents metals onto the walls of the mold by electroplating or electro-less plating, for example, and then heating the deposited films to form the alloy by interdiffusion. When the hydrocarbon gas is introduced into the mold, the film will disintegrate during the filamentary carbon growth process.

Minor impurities in the metal catalyst do not appear to have significant effects. Thus, Monel powder of nominal 70 wt% Ni and 30 wt% Cu compositions with less than about 1 wt% each of Mn and Fe as impurities has been found to be as useful as nominally pure Ni/Cu alloys. Ni/Cu sheet of nominal 55 wt% and 45 wt% Cu composition with minor amounts of Mn and Fe has also been found to be an effective catalyst for filamentary carbon growth.

It has been found that one gram of Ni/Cu alloy catalyst can generate at least 100 g of filamentary carbon before the catalyst particles become inactive. The actual catalyst loading of a mold can therefore be adjusted such that the desired volume density is achieved. The metal alloy particles can at least in part be leached out of the carbon filamentary network with acids if so desired.

Hydrocarbon gases may be converted to a form of carbon by thermal pyrolysis alone. This carbon may be either in particulate form, commonly known as soot, formed by gas phase nucleation and practised in the manufacture of carbon black, or in thin film, pyrolytic form when hydrocarbons are decomposed at very high temperatures, generally above about 900°C. The latter is essentially an example of a process more commonly known as chemical vapor deposition.

Catalytic filamentary carbon growth requires contact between a metal catalyst particle at elevated temperatures and a carbon-bearing gas. Although various hydrocarbon gases can be used, ethylene or ethane are preferred. Formation of soot or pyrolytic carbon reduces the overall efficiency of the process and may interfere as well with the catalytic activity of the metal catalyst particles, and is therefore avoided in the practice of this process.

It has been proposed that carbon source gases that undergo an exothermic decomposition reaction to elemental carbon are required for filamentary carbon growth. Thus gases such as CO, acetylene, ethylene and butadiene readily form filamentous carbon, whereas gases such as methane should not. Filamentous carbon growth from methane is believed to require the thermal conversion of the methane to less stable molecules prior to catalytic conversion to carbon.

For the purposes of this process, the hydrocarbon gases are chosen such that they form insignificant amounts of soot or pyrolytic carbon under the processing conditions, i.e., they will decompose to carbon only in the presence of the metal alloy catalyst. Ethylene is preferred in the temperature range 550° to 650°C, while ethane is preferred in the temperature range 650° to 750°C.

Ethane and ethylene, two of the preferred hydrocarbon source gases, are readily available and relatively inexpensive. Ethane requires somewhat higher temperatures for filamentous carbon growth than does ethylene. The reason for this is believed to be that the ethane first needs to be converted to ethylene by pyrolysis before the metal alloy catalyst can form filamentous carbon.

Benzene is relatively expensive and carcinogenic, while CO is also highly toxic. Methane is found to require very high reaction temperatures, above about 900°C, for any filamentary carbon growth to occur with the alloy catalysts disclosed herein. Under these conditions, pyrolytic carbon deposition also takes place which tends to coat the catalyst particles with a layer of carbon and render them inactive relatively quickly.

Acetylene will form filamentary carbon with Ni/Cu alloy catalysts at temperatures as low as 300°C. Pure acetylene, however, has a tendency to readily form soot due to pyrolysis at temperatures as low as about 450°C.

The purity of the feed gases does not appear to be a critical factor. So-called "chemically pure" grades, approximately 98% purity, of ethane and ethylene have been used successfully without further purification. Although it is likely that some impurities such as hydrogen sulfide may poison the alloy catalysts, this is now known at the present time. Although nominally pure ethane and ethylene are preferred, mixtures of these two gases, as well as mixtures with inert gases such as nitrogen or argon may also be employed. It has also been found that the deliberate addition of hydrogen in the range from about 10 vol% to about 90 vol% prolongs the time that a Ni/Cu catalyst remains active. It is speculated that the hydrogen keeps the catalyst particles relatively free of deposited carbon films.

Under the preferred conditions, as much as 80 mole% of the ethylene or ethane being fed to the reactor has been converted to carbon in the form of carbon filaments. The by-products of this decomposition have been analyzed by gas chromatography and found to be primarily hydrogen, with some methane, as well as smaller amounts of simple saturated hydrocarbon molecules such as propane and butane.

Any unreacted feed gas may be partially recycled, i.e., mixed with pure feed gas to make the process even more efficient. The effluent gas stream from the reactor may also be used as the source of hydrogen if that is desired during the filamentary growth.

The temperature range available for the fabrication of the carbon filaments with the preferred catalyst systems, i.e., Ni/Cu or Ni/Pd, is from about 300°C to about 800°C and is determined primarily by the hydrocarbon gas used. At lower temperatures the rates of carbon growth are not sufficiently rapid, while at higher temperatures, the catalyst particles tend to become coated with a carbon coating rendering them inactive.

It has been shown that, for Ni/Cu and acetylene, temperatures as low as 300°C may be used. For ethylene the temperature may range from about 500°C to 650°C. For ethane, the temperature may range from about 650°C to about 800°C. In the latter case it is believed that the ethane needs to be pyrolyzed or thermally converted to ethylene before it can be catalytically converted to filamentary carbon. Thus, one can envisage preheating the ethane to the required temperature and then letting it contact the catalyst at a lower temperature.

Although the carbon filament fabrication process disclosed hereinabove has been practised in an isothermal mode, there may be advantages to growing the filaments at different temperatures in order to control how quickly and uniformly the filamentary network fills up a mold.

Flow rates are chosen to optimize the growth rate of the carbon filaments and are better defined in terms of residence or contact time. A typical contact time is of the order of 20 sec, although shorter as well as longer contact times have been used successfully. The actual flow rate used will depend on the volume of the mold (or reactor) and the processing temperature and is adjusted to achieve the desired residence time. Very short residence times result in relatively inefficient use of the hydrocarbon gas.

Although the process has been practised only at ambient atmospheric pressure, the catalytic filamentary carbon can be synthesized at pressures below and above atmospheric pressure as well.

Having described in detail different ways of fabricating the filamentary carbon, in the first step of the present process, a filamentary carbon network is formed in-situ within a reactor by the catalytic decomposition of a hydrocarbon feed, utilizing metal alloy catalyst particles that are applied to the walls of the reactor. The seeded reactor is placed into a furnace or heated externally to the desired temperature and a hydrocarbon gas is allowed to flow through the reactor. The filamentary network is permitted to grow until the reactor cavity is filled with the desired volume fraction of filaments. After growth, the carbon filaments are converted to tubular ceramic filaments by first coating them with a ceramic or ceramic forming material by chemical vapor deposition, electro deposition and electro-less deposition and then exposing them to an oxidizing atmosphere at elevated temperature such that the carbon filaments are oxidized and removed as carbon monoxide or carbon dioxide. This process may be carried out within the same reactor described above without any need for handling the filamentary network. Thus the carbon network may be coated with a layer of SiO₂, for example, applied by CVD using tetraethoxysilane which results in a shape conformal coating, covering all exposed surfaces of the carbon filaments. Hexamethyldisilazane (HMDS) may be used to lay down a SiCₓN_{y} overlay coating. The coated network is then exposed to an oxidizing environment such as air at about 900°C for sufficient time to completely oxidize the carbon filamentary core, leaving behind a network of tubular SiO₂ filaments of a diameter controlled by the diameter of the carbon filaments. In the case of the HMDS derived coating, the SiCₓN_{y} coating layer is oxidized to SiO₂.

The resulting material now consists of an interwoven network of tubular SiO₂ filaments, which is a faithful replica of the original carbon network. To facilitate gasification of the carbon, it is preferable that a relatively thin layer (less than about 0.20 µm (0.20 microns)) of the coating material be applied, since oxidation of the carbon filaments can take place via diffusion through the very thin oxide coating.

The ceramic tubular materials may be modified by coating them with another material using chemical vapor deposition (CVD), i.e., after the oxidation step above, another coating may be applied to the filaments. The CVD coating may be applied by passing an appropriate volatile precursor through the tubular network inside the reactor at an appropriate temperature, as is well-known to those skilled in the art, of chemical vapor deposition and infiltration. Any desired thickness of a shape conforming coating of a ceramic, metal or carbon may be applied to the network of tubular ceramic filaments.

In order to achieve a net-shape composite structure, the carbon filament growth process is carried out in a shaped mold. The subsequent CVD and oxidation steps of the process are carried out within the same mold. The resulting ceramic tubular structure may then be made into a composite by infiltration of a matrix material. The matrix material is introduced into the mold as a liquid, and allowed to fill the available space between the filaments, thereby forming the shaped composite structure. The resulting shaped composite part, manufactured without any traditional handling, is removed from the mold, and the mold is recycled. The matrix material (infiltrate) may be a polymer, elastomer, metal, alloy or a ceramic and is used in a liquid state during infiltration of the filamentary network. In ceramic matrix systems, Sol-gel technology provides a basis for effective infiltration and densification of the ceramic network. Polymer infiltration may also be achieved by an in-situ process where the monomer is allowed to polymerize inside the mold.

Although the examples given utilize Si containing coatings on the carbon filaments, which results in micro-tubular materials of SiO₂, it is clear that other ceramic compositions may also be produced by the fabrication method disclosed herein. For example, an aluminum oxide coated filamentary carbon growth would provide a micro-tubular ceramic material of aluminum oxide after removal of the carbon core by oxidation. The filamentary carbon may also be coated with a thin metal layer, e.g., aluminum, which during the oxidation step will be transformed into the corresponding ceramic oxide. The coating material is chosen either so as to be stable during the oxidation step or such that it will itself be transformed into an oxidation stable ceramic material during the oxidation step.

### EXAMPLES

### Example 1

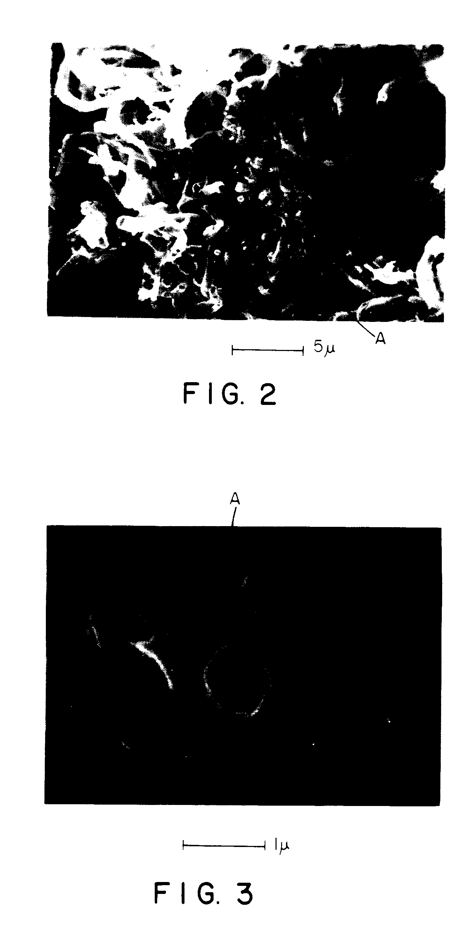

(A) Ni/Cu alloy powder (70/30 wt.%) was placed into a 2.5 cm diameter, 15 cm long quartz reactor inside a 90 cm long furnace and heated to 700°C under Argon flowing at 200 cm³/min (200 cc/min). At temperature, the Ar was replaced by flowing ethane at 100 cm³/min (100 cc/min). After two hours, the ethane was purged with Ar and the reactor cooled down. The growth of filamentary carbon could be observed through an optical window at the exit of the quartz reactor. The filamentary carbon filled the quartz reactor.
(B) The filamentary carbon growth from (A) above was further treated by coating it with a CVD coating of SiCₓN_{y} derived from the pyrolysis of hexamethyldisilazane (HMDS). The reactor was reheated to 700°C under flowing Argon at 200 cm³/min (200 cc/min). At temperature, the Argon flow was reduced to 100 cc/min and saturated with HMDS vapor by bubbling the Argon through a reservoir of liquid HMDS kept at room temperature. The CVD coating (or infiltration) was carried out for 3 hours. Scanning electron microscope (SEM) and X-ray examination of a sample of the carbon filaments after this HMDS exposure showed that the carbon filaments were coated with a conformal Si containing layer (SiCₓN_{y}) approximately 0.2 µm (0.2 microns) thick.
(C) The CVD coated filamentary carbon network from (B) was reheated to 900°C in air for three hours at a flow rate of 100 cm³/min (100 cc/min). After the air exposure, the filamentary growth was found to be white in appearance and SEM examination revealed that tubular filaments of SiO₂ resulted. An example of this material is shown in Figure 2. The carbon filaments have been volatilized by oxidation, and the SiCₓN_{y} coating has been oxidized to SiO₂, leaving behind micro-tubular filaments of silicon dioxide.

### Example 2

Example 1 was repeated except that the HMDS in step (B) was replaced by Tetraethyoxysilane and the temperature was lowered to 550°C during the CVD coating step (infiltration). This precursor is known to deposit SiO₂ coatings. After the oxidation step, SEM examination verified that tubular filaments of silicon dioxide had formed as in Example 1.

## Claims

1. A method for producing a three-dimensional random weave of thin ceramic tubes, which method comprises: contacting a metallic catalyst for growing multi-directional carbon fibers with one or more gaseous hydrocarbons in a mold at a temperature sufficient to form filamentary carbon and insufficient to cause the pyrolytic deposition of carbon, depositing a conformal coating consisting of a ceramic or ceramic forming material on the carbon fibers, and heating the coated fibers in an oxygen containing atmosphere for a time sufficient to volatilize, by oxidation, all or substantially all of the carbon, to form the ceramic tubes.

2. A method according to claim 1, wherein said metallic catalyst is in finely divided form and the catalyst is contacted with the hydrocarbon(s) in said mold at a temperature from the dissociation temperature of the hydrocarbon to about 900°C, and wherein the conformal ceramic coating is deposited to a thickness of from about 0.01 µm (0.01 micron) to about 0.5 µm (0.5 micron) on the carbon fibers.

3. A method according to claim 1 or 2, wherein the conformal coating is deposited by chemical vapor deposition, electroplating or electro-less deposition.

4. A method according to claim 1, 2 or 3, wherein a second conformal coating is deposited on the ceramic tubes after volatilizing the carbon.

5. A method according to claim 4, wherein the second conformal coating is carbon, a metal, a ceramic compound or mixture thereof.

6. A method according to any preceding claim, wherein a liquid matrix material is introduced to the mold and converted to a solid after the volatilization step.

7. A method according to claim 6, wherein the matrix material is a polymer, elastomer, epoxy resin, metal, alloy or ceramic.

8. A method according to claim 6 or 7, wherein the resulting structure has at least one section with a thickness of less than one millimeter.

9. A method according to any preceding claim, wherein the metallic catalyst is contacted with a C₂ hydrocarbon gas in said mold and the temperature at which the contacting takes place is from about 450°C to 750°C.

## Patentansprüche

1. Verfahren zur Herstellung eines dreidimensionalen Zufallsgewebes aus dünnen Keramikröhren, bei dem ein Metallkatalysator zum Züchten von Kohlenstoffasern in mehrere Richtungen mit einem oder mehreren gasförmigen Kohlenwasserstoffen in einer Form bei einer Temperatur, die ausreicht, um fadenförmigen Kohlenstoff zu bilden, und nicht ausreicht, um die pyrolytische Absetzung von Kohlenstoff zu verursachen, kontaktiert wird, eine aus Keramik oder keramikbildendem Material bestehende konturgetreue Beschichtung auf den Kohlenstoffasern aufgebracht wird und die beschichteten Fasern in einer sauerstoffhaltigen Atmosphäre für eine ausreichende Zeit erhitzt werden, um durch Oxidation den gesamten oder im wesentlichen den gesamten Kohlenstoff zu verflüchtigen, um die Keramikröhren zu bilden.

2. Verfahren nach Anspruch 1, bei dem der Metallkatalysator in feinteiliger Form vorliegt, der Katalysator mit dem Kohlenwasserstoff bzw. den Kohlenwasserstoffen in der Form bei einer Temperatur von der Dissoziationstemperatur des Kohlenwasserstoff bis etwa 900°C kontaktiert wird und die konturgetreue Keramikbeschichtung mit einer Dicke von etwa 0,01 µm bis etwa 0,5 µm auf die Kohlenstoffasern aufgebracht wird.

3. Verfahren nach Anspruch 1 oder 2, bei dem die konturgetreue Beschichtung durch CVD-Verfahren (Abscheiden aus der Gasphase), Elektroplattierung oder stromlose Aufbringung aufgebracht wird.

4. Verfahren nach Anspruch 1, 2 oder 3, bei dem eine zweite konturgetreue Beschichtung auf den Keramikröhren aufgebracht wird, nachdem der Kohlenstoff verflüchtigt wurde.

5. Verfahren nach Anspruch 4, bei dem die zweite konturgetreue Beschichtung Kohlenstoff, ein Metall, eine Keramikverbindung oder eine Mischung daraus ist.

6. Verfahren nach einem der vorhergehenden Ansprüche, bei dem ein flüssiges Matrixmaterial in die Form eingebracht wird und nach der Verflüchtigungsstufe in einen Feststoff überführt wird.

7. Verfahren nach Anspruch 6, bei dem das Matrixmaterial ein Polymer, Elastomer, Epoxyharz, Metall, eine Legierung oder Keramik ist.

8. Verfahren nach Anspruch 6 oder 7, bei dem die resultierende Struktur mindestens einen Abschnitt mit einer Dicke von weniger als einem Millimeter aufweist.

9. Verfahren nach einem der vorhergehenden Ansprüche, bei dem der Metallkatalysator mit einem C₂-Kohlenwasserstoffgas in der Form kontaktiert wird und die Temperatur, bei der das Kontaktieren stattfindet, etwa 450°C bis 750°C beträgt.

## Revendications

1. Procédé de production d'une trame tridimensionnelle aléatoire de fins tubes céramiques, ce procédé comprenant les stades suivants : on met en contact un catalyseur métallique pour faire croître des fibres de carbone multidirectionnelles avec un ou plusieurs hydrocarbures gazeux dans un moule à une température suffisante pour former du carbone filamentaire et insuffisante pour provoquer le dépôt pyrolytique du carbone, on dépose un revêtement conforme constitué d'un matériau céramique ou d'un matériau formateur de céramique sur les fibres de carbone et on chauffe les fibres revêtues dans une atmosphère contenant de l'oxygène pendant une période de temps suffisante pour volatiliser par oxydation la totalité ou la presque totalité du carbone afin de former les tubes céramiques.

2. Procédé selon la revendication 1, dans lequel ledit catalyseur métallique se présente sous forme finement divisée et le catalyseur est mis en contact avec le ou les hydrocarbures dans ledit moule à une température allant de la température de dissociation de l'hydrocarbure à 900°C environ, et le revêtement céramique conforme est déposé sur une épaisseur d'environ 0,01 micromètre à environ 0,5 micromètre.

3. Procédé selon la revendication 1 ou 2, dans lequel le revêtement conforme est déposé par dépôt en phase de vapeur chimique, électrodéposition ou dépôt electroless.

4. Procédé selon la revendication 1, 2 ou 3, dans lequel un second revêtement conforme est déposé sur les tubes céramiques après volatilisation du carbone.

5. Procédé selon la revendication 4, dans lequel le second revêtement conforme est constitué de carbone, d'un métal, d'un composé céramique ou de leurs mélanges.

6. Procédé selon l'une quelconque des revendications précédentes, dans lequel une matrice liquide est introduite dans le moule et convertie en solide après le stade de volatilisation.

7. Procédé selon la revendication 6, dans lequel le matériau de la matrice est un polymère, un élastomère, une résine époxy, un métal, un alliage ou une céramique.

8. Procédé selon la revendication 6 ou 7, dans lequel la structure obtenue a au moins une section d'une épaisseur de moins d'un millimètre.

9. Procédé selon l'une quelconque des revendications précédentes, dans lequel le catalyseur métallique est mis en contact avec un hydrocarbure gazeux en C₂ dans ledit moule et la température à laquelle la mise en contact se fait est d'environ 450°C à 750°C.
